# EUROPEAN PATENT SPECIFICATION

(11) **EP 1 937 596 B1**
(45) Date of publication and mention of the grant of the patent: **12.09.2018**
(21) Application number: 06806974.9
(22) Date of filing: 04.10.2006
(51) Int. Cl.: C01F 11/18, C08K 3/30, C01F 11/46

(54) **USE OF BARIUM SULFATE OR CALCIUM CARBONATE PARTICLES IN TRANSPARENT POLYMER COMPOSITIONS, TRANSPARENT POLYMER COMPOSITIONS AND PROCESS FOR MANUFACTURING THESE COMPOSITIONS**
VERWENDUNG VON BARIUMSULFAT- ODER CALCIUMCARBONATTEILCHEN IN TRANSPARENTEN POLYMERZUSAMMENSETZUNGEN, TRANSPARENTE POLYMERZUSAMMENSETZUNGEN UND HERSTELLUNGSVERFAHREN DAFÜR
UTILISATION DE PARTICULES DE SULFATE DE BARYUM OU DE CARBONATE DE CALCIUM DANS DES COMPOSITIONS DE POLYMÈRE TRANSPARENTES, COMPOSITIONS DE POLYMÈRE TRANSPARENTES ET PROCÉDÉ DE FABRICATION DE CES COMPOSITIONS

(30) Priority: 04.10.2005 FR 0510129
(43) Date of publication of application: 02.07.2008
(73) Proprietor: Imerys SA, 75007 Paris (FR)
(72) Inventor: LEFEVRE, Benoît, F-13200 Arles (FR); LACROIX, Marc, B-1348 Louvain-la-neuve (BE); CAVALIER, Karine, F-13200 Arles (FR); RODARY, Gaëlle, F-13270 Fos Sur Mer (FR); PINEAU, Julien, F-13129 Salin De Giraud (FR); JOURQUIN, Christian, B-1083 Brussels (BE); HARDINGHAUS, Ferdinand, 53604 Bad Honnef (DE); PARK, Jai-Won, 37085 Göttingen (DE); KÖHLER, Karl, 31199 Diekholzen (DE); CAILLE, Jean-Raphael, B-5000 Namur (BE); MOMTAZ, Ardechir, B-1180 Brussels (BE)
(74) Representative: Haseltine Lake LLP
(86) International application number: PCT/EP2006/067039
(87) International publication number: WO 2007/039625

(56) References cited:
- EP-A- 0 404 326
- EP-A- 0 522 415
- EP-B- 0 866 770
- WO-A-2005/054133
- FR-A- 2 244 790
- FR-A- 2 480 771
- US-A- 5 750 086
- US-A1- 2004 197 262
- US-A1- 2005 180 912

## Description

The invention relates to the use calcium carbonate particles in polymer compositions. More specifically, it relates to the use of calcium carbonate nanoparticles as filler in transparent polymer compositions

Transparent polymer compositions are especially used as material for replacing glass in applications in which a weight reduction is targeted. This is the case, for example, in the motor vehicle sector in which the use in vehicles of transparent polymer compositions instead of heavy glazing structures (side windows, sunroof, etc.) would afford a weight gain of several tens of per cent, with as a consequence a concomitant reduction in fuel consumption and all the implications that this entails, especially a reduction in the greenhouse effect. It is also the case in the optical sector (spectacles, optical instruments, etc.) for example, in which a reduction in weight would contribute towards improving the personal comfort of the user.

However, the use of transparent polymer compositions is at the present time fairly limited on account of certain remaining disadvantages compared with glass: lower scratch resistance, lower impact strength, less heat stability and ultraviolet (UV) radiation stability. Fillers are used with the aim of eliminating these drawbacks. However, it is difficult to simultaneously improve the mechanical, thermal and light- stability properties while at the same time conserving a high degree of transparency for the filled polymer composition.

US 5665450 relates to 'Optically transparent composite material and process for preparing same'.

The aim of the present invention is to provide transparent polymer compositions that have improved mechanical (scratch resistance, impact strength, tensile strength, etc.), thermal and light- stability (visible, ultraviolet) properties.

The invention relates to the use of transparent polymer compositions as defined in claim 1, a transparent polymer composition as defined in claim 6 and a process for manufacturing transparent polymer compositions as defined in claim 9.

It has been discovered, surprisingly, that when calcium carbonate nanoparticles are added as filler to a transparent polymer composition, good scratch resistance, good impact strength, good tensile strength, good heat stability and high visible and UV radiation stability are simultaneously obtained, while at the same time maintaining excellent transparency for the supplemented polymer composition.

Transparent polymer compositions into which calcium carbonate nanoparticles have been incorporated are to be used as glass substitution materials in the motor vehicle sector and the optics sector.

The calcium carbonate nanoparticles used in the invention may be natural or synthetic calcium carbonate particles. The natural calcium carbonate may be natural calcite or aragonite, chalk or marble. It may be dry-ground or ground in suspension beforehand. Synthetic calcium carbonate is preferred. Precipitated calcium carbonate is more preferred.

The calcium carbonate nanoparticles may consist of substantially amorphous or substantially crystalline calcium carbonate. The term "substantially amorphous or crystalline" means that more than 50 % by weight of the calcium carbonate, preferably more than 75 % by weight and particularly preferably more than 90 % by weight of the calcium carbonate is in amorphous form or in crystalline form, when analysed by the X-ray diffraction technique or by the electron diffraction technique. Substantially amorphous calcium carbonate is preferred.

The calcium carbonate nanoparticles used according to the invention usually have a BET specific surface area of greater than or equal to 10 m²/g, often greater than or equal to 15 m²/g, frequently greater than or equal to 20 m²/g and particularly greater than or equal to 40 m²/g. A specific surface area of greater than or equal to 70 m²/g gives good results. These particles usually have a specific surface area of less than or equal to 300 m²/g, often less than 250 m²/g and frequently less than or equal to 150 m²/g. A specific surface area of less than or equal to 100 m /g is suitable for use. The BET specific surface area of the particles is measured according to ISO standard 9277-1995.
The size of the nanoparticles of of calcium carbonate is measured by the X-ray diffraction (XRD line broadening) technique,
When analysed by the X-ray diffraction (XRD line broadening) technique, the calcium carbonate nanoparticles have a volume weighed average size of less than or equal to 150 nm, preferably of less than or equal to 100, more preferably of less than or equal to 70 nm, yet more preferably of less than or equal to 40 nm, particularly preferably less than or equal to 25 nm and most particularly preferably less than or equal to 10 nm. A volume weighed average size of less than or equal to 5 nm gives particularly good results. This volume weighed average size is generally greater than or equal to 0.5 nm.

The term "nanoparticles" is therefore intended to denote particles with a particle size of less than or equal to 150 nm and greater than or equal to 0.5 nm, the particle size being measured by the X-ray diffraction (XRD line broadening) techniquelf the size of the particles obtained by this method is of less than or equal to 150 nm and greater than or equal to 0.5 nm, the particles are considered as being according to the invention.

The invention thus also relates to the use of calcium carbonate nanoparticles with a particle size of less than or equal to 150 nm and greater than or equal to 0.5 nm, the particle size being measured by the X-ray diffraction (XRD line broadening) technique.

The calcium carbonate nanoparticles used may be in the form of clusters or aggregates whose largest dimension is usually greater than or equal to 1 nm, often greater than or equal to 20 nm, frequently greater than or equal to 50 nm, more especially greater than or equal to 80 nm and most particularly greater than or equal to 140 nm. This largest dimension is usually less than 40 µm, often less than or equal to 4 µm, more specifically less than or equal to 1 µm and most particularly less than or equal to 0.3 µm. These aggregates usually have a smallest dimension of greater than or equal to 0.5 nm, frequently greater than or equal to 10 nm, often greater than or equal to 25 nm, more especially greater than or equal to 40 nm and most particularly greater than or equal to 70 nm. This smallest dimension is usually less than 10 µm, especially less than or equal to 0.7 µm and more specifically less than or equal to 0.2 µm. These dimensions are obtained by measuring the largest and the smallest dimension of individual particles observed in images obtained by scanning electron microscopy (SEM). Without wishing to be bound by any theoretical explanation, it is thought that the interactions between the nanoparticles constituting the clusters or aggregates are weak, which facilitates their dispersion in polymer compositions.

According to one alternative, calcium carbonate is used which has not been modified chemically.

The calcium carbonate particles may contain at least one organic compound. The organic compound contains preferably at least one group capable of generating an anionic group. The anionic group is preferably selected from sulfate, sulfonate, phosphate, phosphonate and carboxylate groups.

The content of the organic compound in the nanoparticle of calcium carbonate is generally greater than or equal to 0.01 % by weight, often greater than or equal to 0.05 % by weight, frequently greater than or equal to 0.1 % by weight and most particularly greater than or equal to 1 % by weight relative to the total weight of the particles. This content is usually less than 90 % by weight, often less than or equal to 50 % by weight, specifically less than or equal to 25 % by weight, more specifically less than or equal to 10 % by weight and most particularly less than or equal to 5 % by weight.

For the calcium carbonate particles, the organic compound can be a surfactant. The surfactant may be of cationic, nonionic or anionic type. Nonionic and anionic surfactant derivatives are preferred. The term "nonionic surfactant derivatives" is intended to denote compounds whose molecule contains at least one non-ionizable polar group and a hydrophobic chain. The nonionic surfactant derivatives that are suitable are especially condensates of an alkylene oxide with an alcohol, polyalkylene glycols and long-chain ketones such as stearone, laurone and coconone and ketones obtained by oxidation of long-chain hydrocarbons such as eicosane. The term "anionic surfactant derivatives" is intended to denote compounds whose molecules comprise at least one anionic group or a group capable of generating an anionic group, and a hydrophobic chain. Examples of hydrophobic chains are especially linear or branched alkyl chains containing from 10 to 60 carbon atoms, monoalkylbenzene and polyalkylbenzene groups and monoalkylnaphthalene and polyalkylnaphthalene groups. The anionic groups may be chosen from sulfate (-C-O-SO₃⁻)_{,} sulfonate (-C-SO₃⁻), phosphate (-C-OPO₃⁻), phosphonate (-C-PO₃⁻) and carboxylate (-COO⁻) groups. Derivatives whose molecules comprise a sulfonate group or a group capable of generating a sulfonate group are, for example, sodium dodecylbenzenesulfonate, dodecylbenzenesulfonic acid and tetracosylbenzenesulfonic acid. A derivative whose molecule comprises a sulfate group or a group capable of generating a sulfate group is, for example, sodium dodecylbenzenesulfate.

Polyether polycarboxylates substituted terminally on the polyether groups by hydroxyl groups, examples being those supplied under the name Melpers® of the company SKW are preferred anionic surfactants. For the calcium carbonate particles, the organic compound can be selected from organic acids, their salts, their esters, alkylsulfates, alkylsulfosuccinates or mixtures thereof.

The organic acids can be selected from carboxylic, sulfonic and phosphonic acids. Carboxylic acids can be aromatic and aliphatic and aliphatic carboxylic acids are more preferred.

The aliphatic carboxylic acid may be any linear or branched or cyclic, substituted or non substituted, saturated or unsaturated, carboxylic acid. The aliphatic carboxylic acid has usually a number of carbon atoms greater than or equal to 4, preferably greater than or equal to 8, more preferably greater than or equal to 10 and most preferably greater than or equal to 14. The aliphatic carboxylic acid has generally a number of carbon atoms lower than or equal to 32, preferably lower than or equal to 28, more preferably lower than or equal to 24 and most preferably lower than or equal to 22.

In a first embodiment, according to the invention, the organic compound is an aliphatic carboxylic acid selected from the group of substituted, non substituted, saturated and unsaturated fatty acids or mixture thereof. More preferably it is selected from the group consisting of caproic acid, caprylic acid, capric acid, lauric acid, myristic acid, palmitic acid, stearic acid, iso-stearic acid, hydroxystearic acid, arachidic acid, behenic acid, lignoceric acid, cerotic acid, montanic acid, melissic acid, myristoleic acid, palmitoleic acid, petroselinic acid, petroselaidic acid, oleic acid, elaidic acid, linoleic acid, linolelaidic acid, linolenic acid, linolenelaidic acid, a-eleostaeric acid, b-eleostearic acid, gadoleic acid, arachidonic acid, erucic acid, brassidic acid and clupanodonic acid, mixtures thereof or salts derived therefrom. Mixtures containing mainly palmitic, stearic and oleic acids are more preferred. Mixtures called "stearine" which consist of about 30 - 40 wt % stearic acid, of about 40 -50 wt % palmitic acid and of about 13 - 20 wt % oleic acid are particularly preferred.

In a second embodiment, according to the invention, the organic compound is a rosin acid. The rosin acid is preferably selected from the group consisting of levopimaric acid, neoabietic acid, palustric acid, abietic acid, dehydroabietic acid, mixtures thereof or salts derived therefrom.

In a third embodiment, the organic compound is a polyacrylic acid, a polyacrylic acid salt or a mixture thereof.

The calcium carbonate particles can be obtained by various processes. Natural calcium carbonate can be processed by mechanically crushing and grading calcareous ore to obtain particles adjusted to the desired size. Synthetic calcium carbonate particles are usually prepared by precipitation. Precipitated calcium carbonate may be manufactured by first preparing a calcium oxide (quick lime) by subjecting limestone to calcination by burning a fuel, such as coke, a petroleum fuel (such as heavy or light oil), natural gas, petroleum gas (LPG) or the like, and then reacting the calcium oxide with water to produce a calcium hydroxide slurry (milk or lime), and reacting the calcium hydroxide slurry with the carbon dioxide discharged from a calcination furnace for obtaining the calcium oxide from limestone to obtain the desired particle size and shape precipitated calcium carbonate (carbonation process). Precipitation of calcium carbonate can also be carried out by adding an alkali metal carbonate starting with lime water (causticisation method) or precipitation by the addition of an alkali metal carbonate starting with solutions containing calcium chloride. Precipitated calcium carbonate obtained from the carbonation process is preferred.

The precipitation may be performed starting from solutions, suspensions or emulsions containing one or more precursors of the calcium and carbonate ions. Emulsion precipitation is preferred. The term "emulsion" is intended to denote the division of a liquid in the form of fine droplets in another liquid. Emulsions generally contain an aqueous liquid phase and an organic liquid phase. Emulsions consisting of fine droplets of aqueous phase in an organic liquid phase are preferred. When the droplets are of micrometric size or less, the systems concerned are known as microemulsions. The term "micrometric size or less" is intended to denote a size of less than or equal to 1 µm, preferably less than or equal to 0.5 µm, particularly preferably less than or equal to 0.25 µm and most particularly preferably less than or equal to 0.1 µm. Microemulsion precipitation is more particularly preferred.

Without wishing to be bound by any theoretical explanation, it is thought that the precipitation takes place in the microdroplets of the aqueous liquid phase and that the size of the droplets defines the size of the calcium carbonate nanoparticles.

The invention also relates to transparent polymer compositions as defined in claim 6 and used in claim 1..

The term "polymer compositions" is intended to denote compositions comprising at least 10 % by weight of at least one polymer. The term "polymer" is used in its generally accepted sense and invariably denotes a homopolymer, a copolymer or a blend of homopolymers and/or copolymers. Oligomers are also here considered as polymers.

The term "transparent polymer compositions" is intended to denote polymer compositions which, in the form of a plate 4 mm thick, allow at least 75 %, preferably at least 85 %, particularly preferably at least 90 % and most particularly preferably at least 93 % of visible light radiation to pass through. The transparency measurement is performed according to ASTM standard D 1746-03 (2003).

The polymer can be a crystalline or an amorphous polymer.

By crystalline polymer, one intends to denote a polymer which has a crystallinity as measured according to Standard ASTD D 3418-03 higher than or equal to 15 %, preferably higher than or equal to 50 %, more preferably higher than or equal to 90 % and most preferably higher than or equal to 95 %. By amorphous polymer, one intends to denote a polymer which has a crystallinity lower than 15 %, preferably lower than or equal to 5 %, more preferably lower than or equal to 1 % and most preferably lower than or equal to 0.5 %. Amorphous polymers are preferred.

These polymers may be selected from polyolefins, vinyl polymers, epoxy resins, silicones, polyurethanes, polyamides, saturated and unsaturated polyesters, polysulfones, cellulose-based polymers, aminoplasts, polycarbonates, copolymers of an α-olefin and of a vinyl monomer, and terpolymers, and mixtures thereof.

These polymers are preferably selected from epoxy resins, polyamides, polysulfones, cellulose-based polymers, aminoplasts and polycarbonates.

The polyolefins may be selected from polymethylpentene, polystyrene, natural and synthetic rubbers, and copolymers based on cyclic olefins. Polymethylpentene, polystyrene and copolymers based on cyclic olefins are preferred.

The vinyl polymers preferably do not contain chlorine atoms. These vinyl polymers are preferably selected from polyvinyl acetate and polymethyl methacrylate.

The silicone may be a modified silicone.

The saturated polyester may be polyethylene terephthalate or polynaphtalene terephtalate.

The copolymers of α-olefin and of a vinyl monomer may be selected from ethylene-vinyl alcohol copolymers, styrene-acrylonitrile copolymers and styrene-methyl methacrylate copolymers.

The terpolymer may be an acrylonitrile-butadiene-styrene copolymer.

Transparent polymer compositions in which the polymer is an epoxy resin or a polycarbonate are particularly preferred, with polycarbonate being the most preferred.

Epoxy resins are organic compounds, generally oligomeric, having more than one epoxide group per molecule. These oligomeric compounds can, using suitable hardeners, be converted into thermosets. Epoxy resins are used as, for example, casting resins or else as laminates (in aircraft, vehicle or watercraft construction, for example).

Monoepoxide compounds used as starting material for producing epoxy resins are, in particular, epichlorohydrin, but also glycidol, styrene oxide, cyclohexene oxide, and glycidol acrylate and methacrylate. Resin is formed by reaction, especially with bisphenol A. For specific resins, other polyols, such as aliphatic glycols, are also suitable. Liquid resins may also be chain-extended by the "advancement" method. Examples of suitable curing agents include dicarboxylic anhydrides or amine hardeners. An elucidation of principles is found for example in Ullmanns Enzyklopädie der Technischen Chemie, 4th edition, volume 10, pages 563 - 580 and in Kirk-Othmer, Encyclopedia of Chemical Technology, 4th edition, volume 9, pages 730 - 755.

Epoxides which are highly suitable are those based on bisphenol A and epichlorohydrin. They may also include admixtures, examples being reaction products of bisphenol F (bis(3-chloro-2-hydroxypropyl) ether) and epichlorohydrin or glycidyl ethers, 1,6-hexanediol diglycidyl ether for example. Very useful epoxides are those with 50 % to 100 % by weight of bisphenol A/epichlorohydrin, 0 % to 50 % by weight, preferably 10 % to 25 % by weight, of bisphenol F/epichlorohydrin, and 0 % to 50 % by weight, preferably 10 % to 25 % by weight, of 1,6-hexanediol glycidyl ether. One commercial product with such a composition is Epilox M730® resin (LEUNA-HARZE GmbH).

Examples of highly suitable hardeners include those based on polyoxyalkylenamines. It is also possible to employ mixtures, examples being mixtures of the polyoxyalkyleneamines with cyclohexanediamines or piperazinylethylamines. A very useful hardener, for example, is one with 50 % to 100 % of polyoxyalkyleneamine, 0 % to 50 % by weight, preferably 10 % to 25 % by weight, of 1,2-cyclohexanediamine (also as an isomer mixture), and 0 % to 50 % by weight, preferably 10 % to 25 % by weight, of 2-piperazin-l-ylethylamine. One commercial product with such a composition is Epilox M888® (LEUNA-HARZE GmbH).

The cured epoxy resins of the invention may comprise further typical constituents such as, for example, curing accelerants or pigments. When the transparent polymer is an epoxy resin, the invention addresses the uncured and/or the cured compound.

Polycarbonates are polyesters of dicarboxylic acids with aliphatic and aromatic dihydroxy compounds. Examples of aromatic dihydroxy compounds are 2,2-bis(4-hydroxyphenyl)propane (Bisphenol A), 1,1-bis(4-hydroxyphenyl)cyclohexane (Bisphenol C), 2,2-bis(3,5-dibromo-4-hydroxyphenyl)propane (tetrabromobisphenol A) and 2,2-bis(3,5-dimethyl-4-hydroxyphenyl)propane (tetramethylbisphenol A) and 1,1-bis(4-hydroxyphenyl)-3,3,5-trimethylcyclohexane (BPTMC) and mixtures thereof.

Bisphenol A is a preferred dihydroxy compound. Aromatic polyester blocks, aliphatic polyether blocks, and polysiloxane blocks may also be co-condensed with Bisphenol A.

Commercial polycarbonates are for example the Makrolon® polycarbonate resin from BAYER.

The content of calcium carbonate nanoparticles in the polymer compositions is generally greater than or equal to 0.5 % by weight of the total composition, often greater than or equal to 1 % by weight, frequently greater than 5 % by weight and most particularly greater than or equal to 10 % by weight. This content is less than or equal to 25 % by weight and especially less than or equal to 20 % by weight.

The polymer compositions may also contain other components known in the art generally such as for examples heat stabilizers, plasticizers, impact modifiers, lubricants, flame retardants, pigments, microbiocides, anti-oxidants, light stabilizers and processing aids.

The use of calcium carbonate nanoparticles as filler in transparent polymer compositions gives these compositions improved properties, such as impact bending strength, strain at break, Young Modulus, Flexural modulus, scratch resistance, tensile strength, impact resistance, heat stability and visible and UV radiation stability.

The invention also relates to a process for manufacturing transparent polymer compositions by dispersing nanoparticles of calcium carbonate in a transparent polymer. Any known methods for dispersing solids into polymers can be used, like for instance, melt blending, solvent blending, in situ polymerization or combination thereof.

The calcium carbonate nanoparticles may be mixed with the polymer during a process of forming the polymer, such as extrusion, injection-moulding, blow-moulding, roto-molding and calendaring. The calcium carbonate nanoparticles may in this case be used in the form of a dispersion in a solvent or in the form of a powder.

The calcium carbonate nanoparticles may be mixed with at least one monomer before polymerizing this monomer. The calcium carbonate nanoparticles may in this case be used in the form of a dispersion in a solvent or in the form of a powder.
Melt blending and extrusion techniques are described in Plastic,Processing (Gert Burkhardt, Ulrich Hüsgen, Matthias Kalwa, Gerhard Pötsch, Claus Schwenzer, Germany, Ullmann's Encyclopedia of Industrial Chemistry, VCH Publishers, Inc., 1992, Vol. A 20, pp 664-756).

The process for manufacturing transparent polymer compositions, comprises the following steps :
a. Preparation of powders or suspensions calcium carbonate nanoparticles with a particle size of less than or equal to 150 nm and greater than or equal to 0.5 nm and,
b1. Mixing of the powders or of the suspensions of the calcium carbonate nanoparticles obtained in step (a) with at least one polymer or
b2. Mixing of the powder or the suspensions of calcium carbonate nanoparticles obtained in step (a) with at least one monomer and polymerization of this monomer.

According to a first specific aspect, the process for preparing the polymer composition comprises the following steps :
1. the polymer component is dissolved in a solvent so as to form a solution of the polymer component in the solvent
2. calcium carbonate nanoparticles are introduced in the solution of step 1 after or during the dissolution, so as to produce a first suspension,
3. a non-solvent of the polymer component is injected in the first mixture of step 2 so as to precipitate the polymer component and to produce a second suspension of an intimate mixture of the polymer component and calcium carbonate nanoparticles
4. the intimate mixture of step 3 is filtrated so as to obtain a solid
5. the solid filtrated in step 4 is dried.
According to a first variant of that first aspect, the non-solvent is introduced in liquid form. Such a process is described in patent applicationWO 03/064504 of SOLVAY SA the content of which is incorporated herein by reference. The solvent is preferably an organic solvent and the non solvent is preferably water.

According to a second variant of that first aspect, the non-solvent is introduced in a liquid form in a quantity such that no inversion of phase occurs and further introduced at least partially in the form of vapor. Such a process is described in patent application WO 05/014705 of SOLVAY SA the content of which is incorporated herein by reference. The solvent is preferably an organic solvent and the non solvent is preferably water and the vapor is preferably steam.

According to a second specific aspect, the process for manufacturing transparent polymer compositions, comprises the following steps:
(a) Preparation of calcium carbonate nanoparticles with a particle size of less than or equal to 150 nm and greater than or equal to 0.5 nm, by
   i. preparation of an emulsion of an aqueous phase in an organic phase, in which the emulsion contains a surfactant derivative and a source of calcium ions,
   ii. optionally, preparation of an emulsion of an aqueous phase in an organic phase, in which the emulsion contains a surfactant derivative and a source of carbonate ions
   iii. mixing of the emulsion prepared in step i with carbon dioxide or with the emulsion prepared in step ii
   iv. distillation of the mixture obtained in step iii to separate it into at least a light fraction and a heavy fraction, the calcium carbonate nanoparticles being in the heavy fraction, and recovery of the heavy fraction
   v. precipitation of the calcium carbonate nanoparticles in the heavy fraction from step iv
   vi. separation and drying of the precipitated calcium carbonate nanoparticles from step v to obtain a powder
   vii. optionally, dispersion of the powder in an organic solvent,
(b1) Mixing of the powder of calcium carbonate nanoparticles obtained in step (a vi) or of the dispersion of the powder in a solvent obtained in step (a vii) with at least one polymer
(b2) Mixing of the powder of calcium carbonate nanoparticles obtained in step (a vi) or of the dispersion of the powder in a solvent obtained in step (a vii) with at least one monomer and polymerization of this monomer.

The emulsion of step (a i) can be replaced by a suspension of a solid calcium component in an organic phase which contains a surfactant derivative. The sources of calcium ions may be selected from calcium oxide (quicklime), calcium hydroxide (slaked lime), and calcium chloride, and mixtures thereof. The sources of carbonate ions are, for example, alkali metal or alkaline-earth metal carbonates or bicarbonates and carbon dioxide. Carbon dioxide can be used pure or diluted, as a gas, as a liquid or as a solid.

In a first embodiment of this second specific aspect of the process according to the invention, calcium oxide or hydroxide is used in step (a i), an alkali metal carbonate is used in step (a ii), and the emulsion prepared in step (a i) is mixed with the emulsion prepared in step (a ii).

In a second embodiment of this second specific aspect of the process according to the invention, which is preferred, calcium oxide or hydroxide is used in step (a i) and gaseous carbon dioxide is used in step (a iii).

The calcium oxide (quicklime) may be obtained via any process, for instance calcination of limestone. The calcium hydroxide may be obtained by reacting calcium oxide with water to produce a solid or a solution (lime water) or a suspension (lime milk, LM) of calcium hydroxide.

The carbon dioxide may originate from calcination ovens used to produce the quicklime or may originate from thermal stations or alternatively from liquid CO₂ reservoirs. Carbon dioxide originating from calcination ovens used to produce the quicklime starting from limestone is preferred.

The organic phase generally comprises an aromatic hydrocarbon and a hydrocarbon-based oil with a boiling point of greater than 150°C and a light alcohol and optionally water.

The aromatic hydrocarbon is, for example, toluene.

The alcohol may be selected from alcohols with an alkyl, alkylaryl or aralkyl chain containing from 1 to 10 carbon atoms. Examples of alcohols are methanol and alkyl phenols.

The surfactant derivative has been described above.

The light fraction recovered in step iv generally comprises compounds with a boiling point of less than or equal to 150°C.

The heavy fraction recovered in step (a iv) generally comprises compounds with a boiling point of greater than 150°C and calcium carbonate nanoparticles. The precipitation of the calcium carbonate nanoparticles in the heavy fraction from step iv is generally performed by adding a polar solvent, for instance a ketone.

Before the precipitation of the calcium carbonate nanoparticles, the heavy fraction from step (a iv) can be submitted to a separation operation, for instance, a centrifugation, to remove solid particles which are not calcium carbonate nanoparticles, from the heavy fraction.

The separation of the calcium carbonate nanoparticles precipitated in step (a v) is performed by any means, for example by filtration or centrifugation. Centrifugation is preferred.

The drying of the precipitated calcium carbonate nanoparticles is performed by any means.

The nanoparticles isolated in solid form may be redispersed in any solvent. It has been discovered, surprisingly, that the dispersions obtained are transparent. The solvent may be chosen from organic and inorganic solvents. Organic solvents are preferred.

Herein, is also described transparent dispersions comprising an organic solvent, into which aggregates comprising at least one organic derivative and consisting of calcium carbonate nanoparticles with a particle size of less than or equal to 150 nm and greater than or equal to 0.5 nm have been incorporated, to a proportion of more than 0.5 % by weight.

The term "transparent dispersions" is intended to denote dispersions not having any turbidity according to ISO standard 15715 (2003).

The organic solvent may be polar or non-polar. The polar solvents may be selected from alcohols and ketones. The non-polar solvents may be selected from aromatic and aliphatic hydrocarbons. An example of a non-polar solvent is toluene.

The content of calcium carbonate nanoparticles in the solvent is usually greater than 5 % by weight, often greater than or equal to 10 % by weight, frequently greater than or equal to 15 % by weight and particularly greater than 25 % by weight.

In these compositions, the calcium carbonate nanoparticles have a particle size distribution (PSD) such that 90 % by weight, preferably 95 % by weight and particularly preferably 99 % by weight of the particles have an ESD measured by SAXS of greater than or equal to 90 % and less than or equal to 110 % of the mean ESD.

The examples that follow serve to illustrate the invention without, however, limiting the scope of the claims.

### Example 1 (according to the invention) - Preparation of calcium carbonate nanoparticles used in the invention

The synthesis is performed in a 500 mL glass reactor at room temperature, with magnetic stirring using a magnetic bar.
a) Tetracosylbenzenesulfonic acid (46.5 g) is mixed with toluene (46 g), methanol (26.6 g) and EXXSOL®D80 (150 g). The whole is stirred at room temperature.
b) 30 g of calcium hydroxide slaked lime (Ca(OH)₂) are then added slowly.
c) Carbon dioxide is bubbled directly into the mixture, with stirring for 55 minutes.
A very viscous brown/black liquid is obtained. A solid and a supernatant are separated by centrifugation.
10 ml of this supernatant are mixed with 3 ml of heptane. 3 ml of acetone are then added. The resulting mixture is centrifuged for 1 hour at 2000 rpm. The supernatant is separated from the centrifugation pellet.

The preceding operation is repeated twice and a solid yellow product is finally isolated.

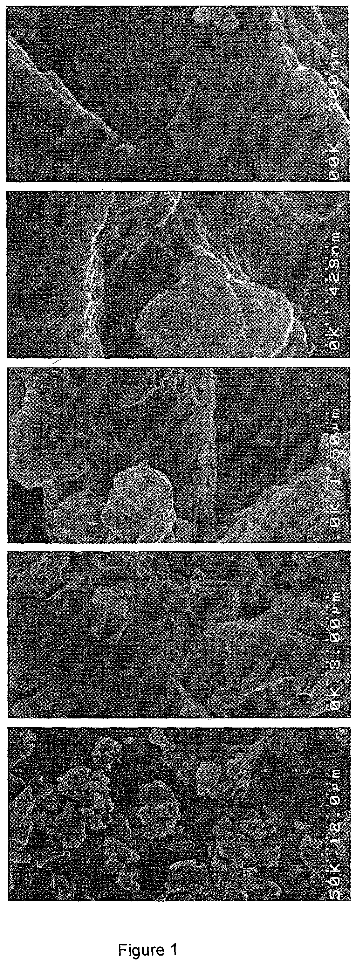

Figure 1 is a photograph by scanning microscopy of the solid obtained.

### Example 2 (according to the invention) - Dispersion of calcium carbonate nanoparticles in toluene

The solid product isolated in the preceding example is mixed with toluene to a proportion of 17 % by weight. The mixture is perfectly transparent by visual observation.

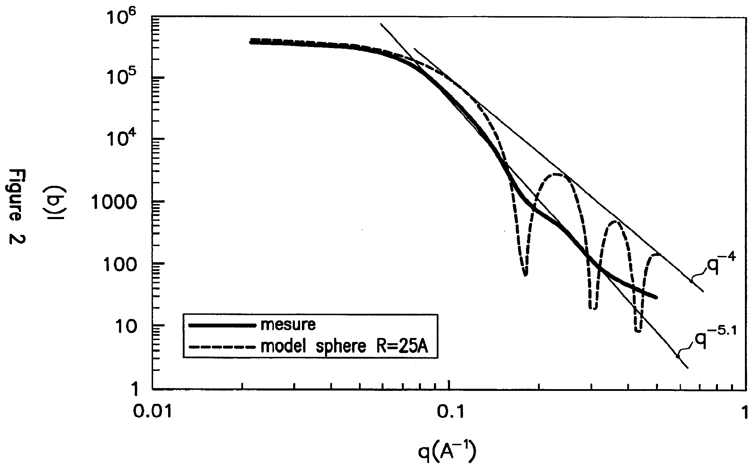

The SAXS spectrum of the toluene suspension is represented in Figure 2 is typical of spheres with a mean equivalent spherical diameter (ESD) of 5 nm and a particle size distribution (PSD) such that 99 % by weight of the particles have an ESD of greater than or equal to 90 % and less than or equal to 110 % of the mean ESD.

The average particle size measured by Dynamic Light Scattering is 7 nm.

### Reference Examples 3 to 4 - Preparation of nanoparticles of barium sulfate

The barium sulphate nanoparticles with the characteristics summarized in Table 1 have been obtained.

Barium sulfate nanoparticles have been obtained following example 1 of patent application WO 2005/054133 of SOLVAY BARIUM STRONTIUM GmbH.

The polyacrylate is Dispex® N40 from CIBA (BaSO₄). The phosphoric acid ester is Disperbyk® 102 from BYK GmbH. The polyethercarboxylate is Melpers® 0030 from BASF.

### Examples 5 to 7 (according to the invention) - Preparation of nanoparticles of calcium carbonate

The calcium carbonate nano particles with the characteristics summarized in Table 1 have been obtained.

The calcium carbonate of example 5 has been obtained following example 1 of patent US 6,342,100 of SOLVAY SA except that the milk of lime contained 2 % of EDTA before carbonation and that the dried solid has been further coated with a polyethercarboxylate (Melpers® 0030 from BASF).

The calcium carbonate of example 6 has been obtained following example 1 of patent US 6,342,100 of SOLVAY SA.

The calcium carbonate of example 7 has been obtained following examples 1 to 3 of patent US 6,342,100 of SOLVAY SA.

### Examples 8 to 11 - Hardened Epoxy resins containing calcium carbonate nanoparticles (according to the invention) and barium sulfate nanoparticles as a reference example.

### Step 1

Nano particles of barium sulphate of example 3 and nano particles of calcium carbonate of example 5 have been mechanically dispersed in butanol (40 % wt of solid) in a pearl mill by using a dispersing additive (polyethercarboxylate Melpers® 0030 from SKW/DEGUSSA). The dispersions exhibit low viscosity, are optically very transparent (visual inspection) and the average particle diameter D₅₀ of the particle size distribution measured by Centrifugal liquid Sedimentation (Standard ISO 13318-2, 2001) is 68 nm for barium sulfate and 51 nm for calcium carbonate.

### Step 2

The dispersions obtained in step 1 have been mixed with Araldite LY 556 (a bisphenol-A based epoxy resin from HUNTSMAN) and the solvent has been removed under vacuum at 60°C to give masterbatches of filled epoxy resins with 50 % wt of filler. Layers of 120 µm thickness of both filled epoxy resins deposited on glass plate are transparent by visual inspection.

### Step 3

The filled epoxy resins of step 2 (2 up to 20 %) have been mixed with Araldite LY 556 (100 parts by wt), Aradur HY 917 (a phthalic acid anhydride based hardener from HUNTSMAN, 0.98 parts by wt) and DY 070 (a methylimidazole accelerator from HUNTSMAN, 0.5 parts by wt), casted as 2 mm thick plates and then cured at 4 h at 80°C and 4 h at 120°C.

### Example 12 (not according to the invention) - Hardened Epoxy resins without barium sulfate nano particles and without calcium carbonate nanoparticles

Hardened epoxy-resins free of barium sulfate and free of calcium carbonate have been prepared according to step 3 of the previous examples. Testing

The filled (examples 8 to 11) and unfilled (example 12) hardened (cured) materials have been tested for transparency by visual inspection, for dispersion using Scanning and Transmission Electron Microcopy techniques and for impact bending strength using Standard DIN ISO 179-1 Type 1 (2000), strain at break, Young Modulus and tensile strength according to standard ISO DIN ISO 527-4 (1997).

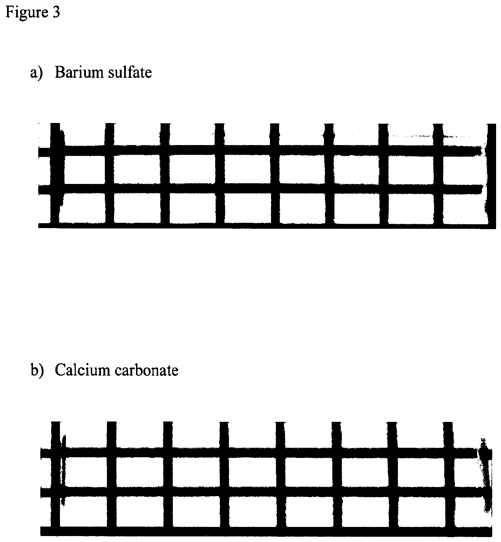

Figure 3 shows the transparency test results for hardened epoxy resins containing 2.5 % wt of barium sulphate (a) and of calcium carbonate (b).

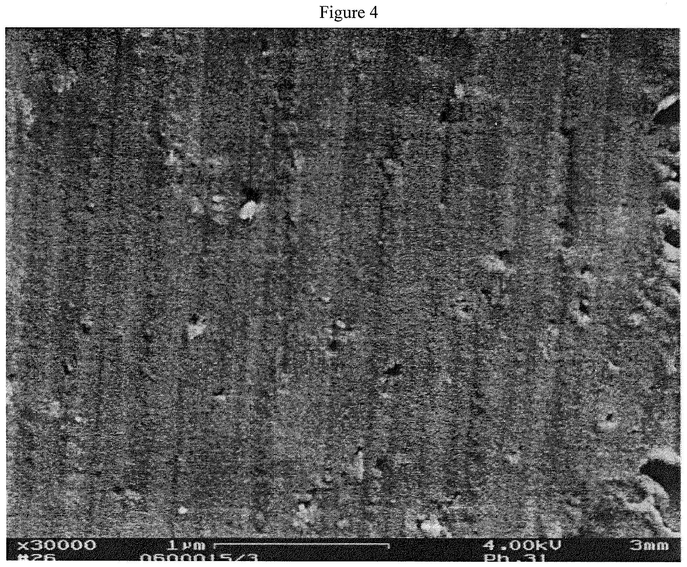

Figure 4 show a SEM picture of a hardened epoxy resin with 2.5 % wt of calcium carbonate.

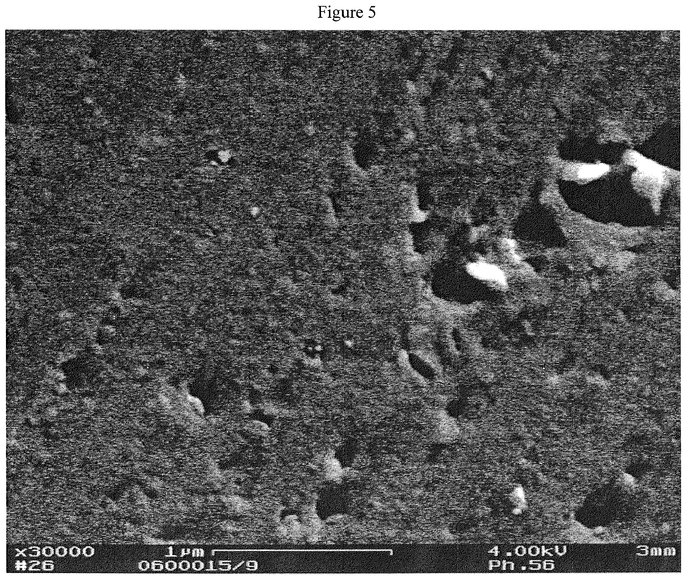

Figure 5 show a SEM picture of a hardened epoxy resin with 2.5 % wt of barium sulfate.

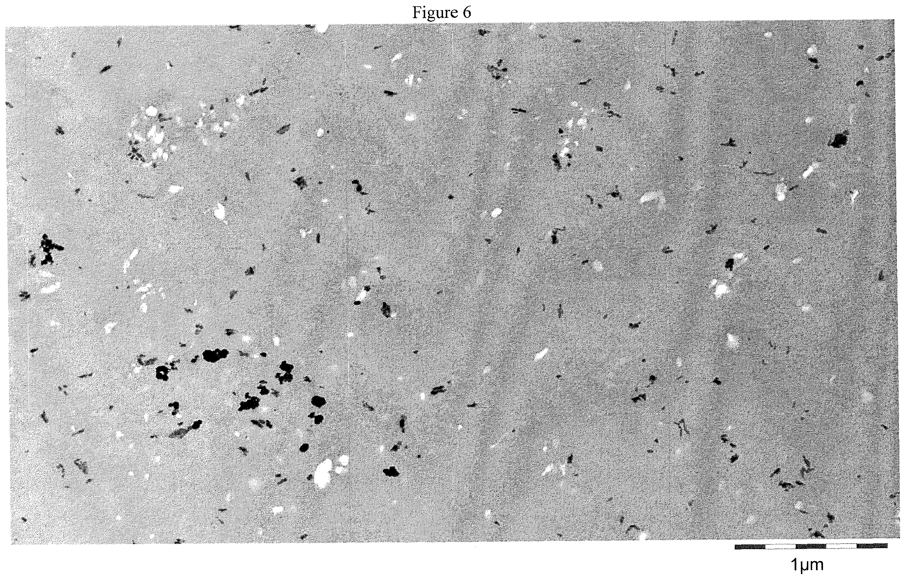

Figure 6 show a TEM picture of a hardened epoxy resin with 2.5 % wt of calcium carbonate.

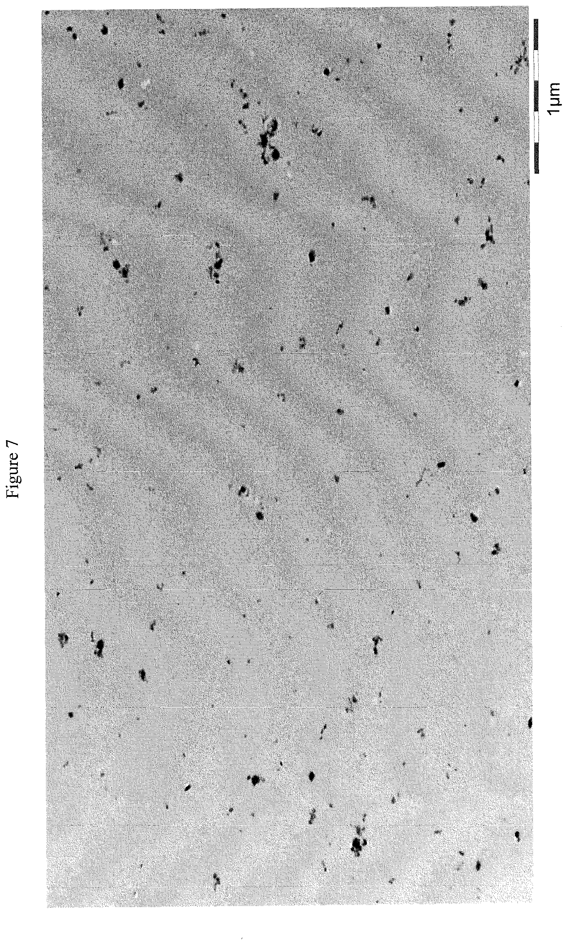

Figure 7 show a TEM picture of a hardened epoxy resin with 2.5 % wt of calcium carbonate.
Table 2 summarizes the mechanical tests results.

### Reference Example 13 - Polycarbonate containing barium sulfate nanoparticles

### Step 1

Masterbatches of polycarbonate containing nanoparticles of barium sulfate have been prepared by mixing nano barium sulfate of example 4 with polycarbonate (Makrolon 2205, BAYER) following the procedure described in WO 05/014705 and WO 03/064504 of SOLVAY SA.

### Step 2

A polycarbonate containing nanoparticles of barium sulfate has been prepared by extruding (CLEXTRAL BC21) and pelletizing (SCHEER 50 granulator) mixtures of neat polycarbonate and of the masterbatches prepared in step 1. The content of barium sulphate is 6 phr (parts per hundred of resin).

### Example 14 (not according to the invention) - Polycarbonate without BaSO₄ nano particles

The same experiment has been repeated as in example 13 except that no barium sulfate has been added at step 1.

### Testing

Samples have been prepared and tested for the Scratch resistance (Standard ISO 1518 (2001), apparatus form Sheen, load of 2000 g), for the Flexural Modulus (Standard ISO 178, speed of 1 mm/min, segment module taken between 0.05 % and 0.25 % of the curve) and for the impact resistance (standard ISO 899). The results are reported in Table 3.

### Examples 15 and 16 (according to the invention) - Polycarbonate containing CaCO₃ nano particles

The precipitated calcium carbonate nanoparticles of examples 6 and 7 have been used.

A polycarbonate polymer (Makrolon AL 2647 from BAYER, 100 g) has been introduced in a mixer (BRABENDER GmbH and Co.) at 280°C and kept for 1 minute after complete melting of the polymer before introducing the calcium carbonate (1 g) of example 6 (polycarbonate of example 15) or of example 7 (polycarbonate of example 16). The resulting mixture has been mixed for 8 minutes at the 280°C. The hot mixture has then been transferred to a press and pressed to obtain plates with a few mm thickness.

The plates have been tested for transparency according to standard DIN 6174. The L parameter derived from the Cielab formula normalized to length unit is taken as a measure of the transparency of the plates. The results are summarized in Table 4.

**Table 1**

| Example | | S_{BET} (m²/g) | Size^{a} (nm) | Size^{b} (nm) | Size^{c} (nm) | Organic compound (wt%) |
|---|---|---|---|---|---|---|
| | | | | | | |
| 3 | BaSO₄ | 47 | 36 | 68 | - | 11,5^{e} |
| 4 | BaSO₄ | 43 | 42 | 121 | - | 18^{d} |
| 5 | CaCO₃ | 61 | 21 | 51 | - | 5^{f} - |
| 6 | CaCO₃ | 20 | - | - | 70 | - |
| 7 | CaCO₃ | 19 | - | - | 70 | 2.9^{g} |

Examples according to the present invention: 5-7, Reference Examples: 3-4
a: X-ray diffraction line broadening
b: Centrifugal liquid Sedimentation
c: Air permeation
d: 3 % of polyacrylate, 15 % of phosphoric acid ester
e: 3 % of polyacrylate, 8.5 % of polyethercarboxylate
f: 2 % of EDTA, 3 % of polyethercarboxylate
g: 2.9 % stearic acid

**Table 2**

| Epoxy resin Example | Nano BaSO₄ or CaCO₃ Example | Filler content (wt %) | Impact bending strength (kJ/m²) | Strain at break (%) | Young Modulus (MPa) | Tensile strength (MPa) |
|---|---|---|---|---|---|---|
| | | | | | | |
| 12 | - | 0 | 30.9 | 2.36 | 3140 | 64.0 |
| 8 | 3 | 2.5 | 49.5 | 3.66 | 3036 | 80.3 |
| 9 | 5 | 2.5 | 36.1 | 3.46 | 3163 | 80.5 |
| 10 | 3 | 10 | 25.7 | 2.46 | 3266 | 64.2 |
| 11 | 5 | 10 | 31.8 | 2.99 | 3362 | 78.3 |

Examples according to the present invention: 9 and 11, Reference Examples: 8 and 10

**Table 3**

| Poly carbonate Example | Nano BaSO₄ Example | Scratch resistance (2kg) (µm) | Flexural Modulus (MPa) | Impact resistance (J/mm) | |
|---|---|---|---|---|---|
| | | | | At 23°C | At -20°C |
| 14 | - | 16.2 | 2760 | 30.575 | 25.368 |
| 13 | 4 | 14.2 | 2962 | 26.448 | 24.390 |

Reference Examples: 13 and 14

**Table 4**

| Poly carbonate Example | Nano CaCO₃ Example | Plate thickness. e(mm) | L | L/e (mm⁻¹) |
|---|---|---|---|---|
| 15 | 6 | 1.959 | 79.15 | 40.38 |
| 16 | 7 | 1.676 | 74.70 | 44.46 |

Examples according to the present invention: 15 and 16

## Claims

1. Use of transparent polymer compositions, which, when the transparency measurement is performed according to ASTM standard D 1746-03 (2003), in the form of a plate being 4 mm thick, allows at least 75 % of visible light radiation to pass through, in which nanoparticles of calcium carbonate, with a particle size, measured by X-ray diffraction technique, of less than or equal to 150 nm and greater than or equal to 0.5 nm, have been incorporated, wherein the content of calcium carbonate nanoparticles is equal to or less than 25 % by weight of the total composition, as glass substitution materials in the motor vehicle sector and the optics sector.

2. Use according to claim 1 wherein the calcium carbonate is precipitated calcium carbonate.

3. Use according to either of Claims 1 and 2, in which the nanoparticles of calcium carbonate used are in the form of clusters whose largest dimension is greater than or equal to 1 nm and less than or equal to 40 µm and whose smallest dimension is greater than or equal to 0.5 nm and less than or equal to 10 µm, as measured by scanning electron microscopy.

4. Use according to any of Claims 1 to 3, in which the particles contain at least one organic compound and in which the content of organic compound is greater than or equal to 0.01 % and less than or equal to 90 % of the total weight of the particles.

5. Use according to claim 4, wherein the organic compound contains at least one group capable of generating an anionic group selected from sulfate, sulfonate, phosphate, phosphonate and carboxylate groups.

6. Transparent polymer compositions, which, when the transparency measurement is performed according to ASTM standard D 1746-03 (2003), in the form of a plate being 4 mm thick, allows at least 75 % of visible light radiation to pass through, comprising at least one polymer in which nanoparticles of calcium carbonate with a particle size, measured by X-ray diffraction, of less than or equal to 150 nm and greater than or equal to 0.5 nm have been incorporated, wherein the content of calcium carbonate nanoparticles is equal to or less than 25 % by weight of the total composition, being suitable to use as glass substitution materials in the motor vehicle and the optics sector.

7. Transparent polymer compositions according to Claim 6, in which the polymer is selected from polyolefins, vinyl polymers, epoxy resins, silicones, polyurethanes, polyamides, saturated and unsaturated polyesters, polysulfones, cellulose-based polymers, aminoplasts, polycarbonates, copolymers of an α-olefin and of a vinyl monomer, and terpolymers, and mixtures thereof, and in which the nano particles of calcium carbonate have been incorporated, in a proportion of more than 0.5 % by weight.

8. Transparent polymer compositions according to Claim 7, in which the polyolefins are selected from polymethylpentene, polystyrene, natural and synthetic rubbers and copolymers based on cyclic olefins, and in which the vinyl polymers are selected from vinyl polymers not containing chlorine atoms, preferably from polyvinyl acetate and polymethyl methacrylate, and in which the silicone is a modified silicone, and in which the saturated polyester is selected from polyethylene terephthalate and polynaphtalene terephtalate, and in which the copolymers of an α-olefin and of a vinyl monomer are selected from ethylene-vinyl alcohol copolymers, styrene-acrylonitrile copolymers and styrene-methyl methacrylate copolymers, and in which the terpolymer is an acrylonitrile-butadiene-styrene copolymer.

9. Process for manufacturing transparent polymer compositions which, when the transparency measurement is performed according to ASTM standard D 1746-03 (2003), in the form of a plate being 4 mm thick, allows at least 75 % of visible light radiation to pass through, being suitable to use as glass substitution materials in the motor vehicle sector and the optics sector, comprising the following steps :
a. Preparation of powders or suspensions of calcium carbonate nanoparticles with a particle size, measured by X-ray diffraction, of less than or equal to 150 nm and greater than or equal to 0.5 nm and,
b1. Mixing of the powders or of the suspensions of calcium carbonate nanoparticles obtained in step (a) with at least one polymer or
b2. Mixing of the powder or the suspensions of the calcium carbonate nanoparticles obtained in step (a) with at least one monomer and polymerization of this monomer,
wherein the content of calcium carbonate nanoparticles in the transparent polymer compositions is equal to or less than 25 % by weight of the total composition.

10. Process according to Claim 9, in which the mixing in step b1 or b2 is performed during a process of forming the polymer such as extrusion, injection-moulding, blow-moulding, roto-moulding and calendaring.

## Patentansprüche

1. Verwendung von transparenten Polymergemischen, die, wenn die Transparenzmessung gemäß ASTM-Standard D 1746-03 (2003) in Form einer 4 mm starken Platte erfolgt, mindestens 75 % sichtbarer Lichtstrahlung durchlassen, in der Nanopartikel aus Calciumcarbonat mit einer Partikelgröße, gemessen mittels Röntgenbeugung, von kleiner oder gleich 150 nm und größer oder gleich 0,5 nm, eingearbeitet wurden, wobei der Gehalt an Calciumcarbonat-Nanopartikeln gleich oder kleiner als 25 Gewichts-% des Gesamtgemisches ausmacht, als Glasersatzwerkstoffe im Kfz- und optischen Bereich.

2. Verwendung gemäß Anspruch 1, wobei das Calciumcarbonat ausgefälltes Calciumcarbonat ist.

3. Verwendung gemäß einem der Ansprüche 1 und 2, wobei die verwendeten Nanopartikel aus Calciumcarbonat in Form von Clustern vorliegen, deren größte Abmessung größer oder gleich 1 nm und kleiner oder gleich 40 pm ist und deren kleinste Abmessung größer oder gleich 0,5 nm und kleiner oder gleich 10 pm ist, gemessen durch Rasterelektronenmikroskopie.

4. Verwendung gemäß einem der Ansprüche 1 bis 3, wobei die Partikel mindestens eine organische Verbindung enthalten und der Gehalt an organischer Verbindung größer oder gleich 0,01 % und kleiner oder gleich 90 % des Gesamtgewichts der Partikel ist.

5. Verwendung gemäß Anspruch 4, wobei die organische Verbindung mindestens eine Gruppe enthält, die in der Lage ist, eine anionische Gruppe, ausgewählt aus einer Sulfat-, Sulfonat-, Phosphat-, Phosphonat- und Carboxylatgruppe, zu generieren.

6. Transparente Polymergemische, die bei Durchführung der Transparenzmessung gemäß ASTM-Norm D 1746-03 (2003) in Form einer 4 mm starken Platte mindestens 75 % der sichtbaren Lichtstrahlung durchlassen, mindestens ein Polymer umfassend, in dem Nanopartikel aus Calciumcarbonat mit einer Partikelgröße, gemessen durch Röntgenbeugung, von kleiner oder gleich 150 nm und größer oder gleich 0,5 nm eingearbeitet sind, wobei der Gehalt an Calciumcarbonat-Nanopartikeln gleich oder weniger als 25 Gewichts-% des Gesamtgemisches ausmacht und zur Verwendung als Glasersatzwerkstoff im Kfz- und optischen Bereich geeignet ist.

7. Transparente Polymergemische gemäß Anspruch 6, bei denen das Polymer aus Polyolefinen, Vinylpolymeren, Epoxidharzen, Silikonen, Polyurethanen, Polyamiden, gesättigten und ungesättigten Polyestern, Polysulfonen, Polymeren auf Cellulosebasis, Aminoplasten, Polycarbonaten, Copolymeren eines n-Olefins und eines Vinylmonomers sowie Terpolymeren und Mischungen davon gewählt ist, und bei denen die Nanopartikel aus Calciumcarbonat in einem Anteil von mehr als 0,5 Gewichts-% enthalten sind.

8. Transparente Polymergemische gemäß Anspruch 7, bei denen die Polyolefine aus Polymethylpenten, Polystyrol, Natur- und Synthesekautschuken und Copolymeren auf Basis cyclischer Olefine gewählt sind, und bei denen die Vinylpolymere aus chloratomenfreien Vinylpolymeren, vorzugsweise aus Polyvinylacetat und Polymethylmethacrylat, gewählt sind und bei denen das Silikon ein modifiziertes Silikon ist, und worin der gesättigte Polyester aus Polyethylenterephthalat und Polynaphtalenterephthalat gewählt ist, und worin die Copolymere eines U-Olefins und eines Vinylmonomers aus EthylenVinylalkohol-Copolymeren, Styrol-Acrylnitril-Copolymeren und Styrol-Methylmethacrylat-Copolymeren gewählt sind, und worin das Terpolymer ein Acrylnitril-Butadien-Styrol-Copolymer ist.

9. Verfahren zur Herstellung transparenter Polymergemische, die bei Durchführung der Transparenzmessung gemäß ASTM-Standard D 1746-03 (2003) in Form einer 4 mm starken Platte mindestens 75 % der sichtbaren Lichtstrahlung durchlassen, geeignet zur Verwendung als Glasersatzstoffe im Kfz-Bereich und im Optikbereich, umfassend die folgenden Schritte:
a. Herstellung von Pulvern oder Suspensionen von Calciumcarbonat-Nanopartikeln mit einer Partikelgröße, gemessen durch Röntgenbeugung, kleiner als oder gleich 150 nm und größer als oder gleich 0,5 nm und
b1. Mischen der in Schritt (a) erhaltenen Pulver oder Suspensionen von Calciumcarbonat-Nanopartikeln mit mindestens einem Polymer oder
b2. Mischen des Pulvers oder der Suspensionen der in Schritt (a) erhaltenen Calciumcarbonat-Nanopartikel mit mindestens einem Monomer und Polymerisation dieses Monomers,
wobei der Gehalt an Calciumcarbonat-Nanopartikeln in dem transparenten Polymergemisch gleich oder kleiner als 25 Gewichts-% der Gesamtmenge des Gemisches beträgt.

10. Verfahren gemäß Anspruch 9, bei dem das Mischen in Schritt b1 oder b2 während eines Prozesses zur Bildung des Polymers wie Extrusion, Spritzgießen, Blasformen, Rotationsformen und Kalandrieren durchgeführt wird.

## Revendications

1. L'utilisation de compositions polymères transparentes, qui, lorsque la mesure de transparence est effectuée selon la norme ASTM D 1746-03 (2003), sous la forme d'une plaque de 4 mm d'épaisseur, permet au moins le passage de 75 % du rayonnement de lumière visible dans lequel des nanoparticules de carbonate de calcium, ayant une granulométrie, mesurées par la technique de diffraction des rayons X, inférieures ou égales à 150 nm et supérieures ou égales à 0,5 nm, ont été incorporées, dans laquelle la teneur en nanoparticules de carbonate de calcium est égale ou inférieure à 25 % en poids de la composition totale, utilisable comme matériaux de substitution de verre dans les secteurs de l'automobile et de l'optique.

2. L'utilisation selon la revendication 1, dans laquelle le carbonate de calcium est du carbonate de calcium précipité.

3. L'utilisation selon l'une des revendications 1 et 2, dans laquelle les nanoparticules de carbonate de calcium utilisées sont sous forme de grappes dont la plus grande dimension est supérieure ou égale à 1 nm et inférieure ou égale à 40 µm et dont la plus petite dimension est supérieure ou égale à 0,5 nm et inférieure ou égale à 10 µm, telle que mesurée par microscopie électronique à balayage.

4. L'utilisation selon l'une quelconque des revendications 1 à 3, dans laquelle les particules contiennent au moins un composé organique et dans laquelle la teneur en composé organique est supérieure ou égale à 0,01 % et inférieure ou égale à 90 % du poids total des particules.

5. L'utilisation selon la revendication 4, dans laquelle le composé organique contient au moins un groupe capable de générer un groupe anionique choisi parmi les groupes sulfate, sulfonate, phosphate, phosphonate et carboxylate.

6. Compositions polymères transparentes, qui, lorsque la mesure de transparence est réalisée selon la norme ASTM D 1746-03 (2003), sous la forme d'une plaque de 4 mm d'épaisseur, permet au moins le passage de 75 % du rayonnement de lumière visible, comprenant au moins un polymère dans lequel des nanoparticules de carbonate de calcium ayant une granulométrie, mesurées par diffraction des rayons X, inférieures ou égales à 150 nm et supérieures ou égales à 0,5 nm, ont été incorporées, dans lesquelles la teneur en nanoparticules de carbonate de calcium est égale ou inférieure à 25 % en poids de la composition totale, utilisable comme matériaux de substitution de verre dans les secteurs de l'automobile et de l'optique.

7. Compositions polymères transparentes selon la revendication 6, dans lesquelles le polymère est choisi parmi les polyoléfines, les polymères vinyliques, les résines époxy, les silicones, les polyuréthanes, les polyamides, les polyesters saturés et insaturés, les polysulfones, les polymères cellulosiques, les aminoplastes, les polycarbonates, les copolymères d'une α-oléfine et d'un monomère vinylique, et des terpolymères, et leurs mélanges, et dans lesquelles les nanoparticules de carbonate de calcium ont été incorporées, dans une proportion supérieure à 0,5 % en poids.

8. Compositions de polymères transparents selon la revendication 7, dans lesquelles les polyoléfines sont choisies parmi le polyméthylpentène, le polystyrène, les caoutchoucs naturels et synthétiques et les copolymères à base d'oléfines cycliques, et dans lesquelles les polymères vinyliques sont choisis parmi les polymères vinyliques ne contenant pas d'atomes de chlore, de préférence parmi le polyacétate de vinyle et le polyméthacrylate de méthyle, et dans lesquelles le silicone est un silicone modifié, et dans lesquelles le polyester saturé est choisi parmi le polyéthylène téréphtalate et le polynaphtalène téréphtalate, et dans lesquelles les copolymères d'une α-oléfine et d'un monomère vinylique sont choisis parmi les copolymères éthylène-alcool vinylique, les copolymères styrène-acrylonitrile et les copolymères styrène-méthacrylate de méthyle, et dans lesquelles le terpolymère est un copolymère acrylonitrile-butadiène-styrène.

9. Procédé de fabrication de compositions polymères transparentes qui, lorsque la mesure de transparence est réalisée selon la norme ASTM D 1746-03 (2003), sous forme d'une plaque de 4 mm d'épaisseur, permet au moins le passage de 75 % de rayonnement de lumière visible, utilisable comme matériaux de substitution de verre dans les secteurs de l'automobile et de l'optique, comprenant les étapes suivantes :
a. préparation de poudres ou de suspensions de nanoparticules de carbonate de calcium ayant une granulométrie, mesurée par diffraction des rayons X, inférieure ou égale à 150 nm et supérieure ou égale à 0,5 nm et,
b1. mélange des poudres ou des suspensions de nanoparticules de carbonate de calcium obtenues à l'étape (a) avec au moins un polymère ou
b2. mélange de poudre ou des suspensions des nanoparticules de carbonate de calcium obtenues à l'étape (a) avec au moins un monomère et polymérisation de ce monomère,
dans lequel la teneur en nanoparticules de carbonate de calcium dans les compositions de polymères transparentes est égale ou inférieure à 25 % en poids de la composition totale.

10. Procédé selon la revendication 9, dans lequel le mélange à l'étape b1 ou b2 est effectué au cours d'un procédé de formation du polymère tel que l'extrusion, le moulage par injection, le moulage par soufflage, le rotomoulage et le calandrage.
